# EUROPÄISCHE PATENTANMELDUNG

(11) **EP 0 578 283 A1**
(43) Veröffentlichungstag der Anmeldung: **12.01.1994**
(21) Anmeldenummer: 93113907.5
(22) Anmeldetag: 12.09.1991
(51) Int. Cl.: F16L 47/04, F16L 19/02

(54) **Sanitär- und Heizungsrohrsystem, vollständig oder überwiegend bestehend aus Kunststoff**

(30) Priorität: 10.05.1991 DE 9105824 U; 15.11.1990 DE 9015675 U; 10.05.1991 DE 9105823 U; 24.04.1991 DE 9105038 U; 26.04.1991 DE 9105171 U
(62) Teilanmeldung aus: 91115490.4
(71) Anmelder: RAFELD KUNSTSTOFFTECHNIK GmbH & Co. KG, 87640 Ebenhofen (DE)
(72) Erfinder: Rafeld, Karl, D-87640 Ebenhofen (DE)
(74) Vertreter: Kern, Wolfgang, Dipl.-Ing.

(57) **Zusammenfassung**

Ein Sanitär- und Heizungsrohrsystem, das vollständig oder überwiegend aus Kunststoff, insbesondere Polypropylen, besteht und für die Wasserversorgung dient, ist mit Druckverschraubungen (1), insbesondere für Heißwasser und aggressive Flüssigkeiten ausgestattet, die eine mit einem Innengewinde (7) versehene Überwurfmutter (3) mit einem bodenseitigen Ringflansch (10) aufweisen, der eine zentrische Öffnung (11) für den Durchgang des einen von zwei Flüssigkeitsrohren (12) besitzt und zur Aufnahme eines Endflansches (9) des einen Flüssigkeitsrohres (12) direkt mit einer mit einem Außengewinde (6) versehenen und das andere Flüssigkeitsrohr (13) umgebenden Mutter (4) zusammenwirkt, die mit der Überwurfmutter (3) verschraubbar ist und deren unteres Ende (14) gegen einen Endflansch (8) des anderen Flüssigkeitsrohres (13) verschraubbar ist, der auf dem Endflansch (9) des ersten Flüssigkeitsrohres aufliegt.

## Beschreibung

Die Erfindung betrifft ein Sanitär- und Heizungsrohrsystem, vollständig oder überwiegend bestehend aus Kunststoff, insbesondere Polypropylen, für die Wasserversorgung, mit Druckverschraubungen, insbesondere für Heißwasser und aggressive Flüssigkeiten.

Derartige Druckverschraubungen dienen im allgemeinen zur flüssigkeitsdichten Verbindung zweier Rohrleitungen oder einer Rohrleitung mit einem Anschlußnippel und müssen nicht nur vor aggressiven Flüssigkeiten geschützt werden, sondern auch relativ hohe Drücke und Temperaturen aushalten bzw. gewährleisten, daß Verbindungen der genannten Art unter derartigen Bedingungen nicht undicht werden.

Hier leistet die Erfindung einen Beitrag, indem sie bei einer derartigen Druckverschraubung eine mit einem Innengewinde versehene Überwurfmutter mit einem bodenseitigen Ringflansch vorschlägt, der mit einer zentrischen Öffnung für den Durchgang des einen von zwei Flüssigkeitsrohren versehen ist und zur Aufnahme eines Endflansches des einen Flüssigkeitsrohres direkt durch eine mit einem Außengewinde versehene und das andere Flüssigkeitsrohr umgebende Mutter, die mit der Überwurfmutter verschraubbar ist und deren unteres Ende gegen einen Endflansch des anderen Flüssigkeitsrohres verschraubbar ist, der auf dem Endflansch des ersten Flüssigkeitsrohres aufliegt.

Durch diese Kontstruktion wird sichergestellt, daß auch Flüssigkeitsrohre aus Kunststoff, beispielsweise aus Polypropylen, die gegen die meisten aggressiven und heißen Flüssigkeiten beständig sind, so verschraubt werden können, daß sich die Schraubverbindung unter Druck und Wärmeeinwirkung nicht löst, was insbesondere darauf zurückzuführen ist, daß die beiden Muttern aus Metall bestehen und so gestaltet sind, daß sie mit den jeweiligen aggressiven Flüssigkeiten nicht in Berührung kommen.

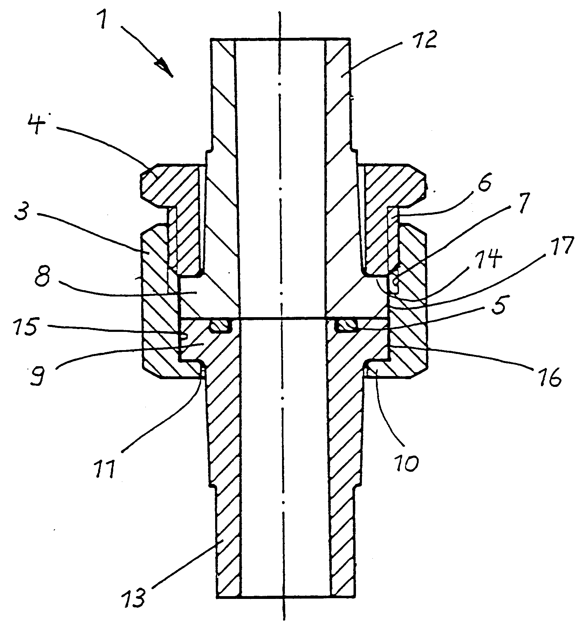

Die Erfindung wird nachfolgend an Hand des in der Zeichnung dargestellten Ausführungsbeispiels, das im Längsschnitt die erfindungsgemäße Druckverschraubung in Verbindung mit zwei miteinander zu verbindenden Flüssigkeitsrohren zeigt, näher erläutert.

Die Druckverschraubung 1 verbindet die beiden aus Polypropylen bestehenden Kunststoffe 12, 13 über deren Endflansche 8, 9 mittels einer Überwurfmutter 3 und einer mit dieser verschraubbaren Mutter 4, die aus Metall bestehen. Durch die Rohre 12, 13 wird heiße, aggressive Flüssigkeit unter Druck gefördert. Die Rohre sind so ausgelegt, daß sie Drücken bis 25 bar bei Temperaturen bis 80°C widerstehen.

In dem einen Endflansch 9 befindet sich eine Ringdichtung 5. Dieser Endflansch sitzt auf einem Ringflansch 10 der Überwurfmutter 3 auf. Zu diesem Zweck weist der Ringflansch eine zentrische Öffnung 11 für den Durchgang des Flüssigkeitsrohres 13 auf.

Der Außenumfang 17 des Endflansches 8 des einen Flüssigkeitsrohres 12 liegt zusammen mit dem Außenumfang 16 des Ringflansches 9 des anderen Flüssigkeitsrohres 13 im verschraubten Zustand der beiden Muttern 3, 4 an der inneren Umfangsfläche 15 der Überwurfmutter 3 an, deren Außendurchmesser dem Außendurchmesser der Mutter 4 entspricht.

Beim Verbinden der beiden Flüssigkeitsrohre 12, 13 werden die beiden Muttern 3, 4 über diese Rohre geschoben, woraufhin die Mutter 4 mit ihrem Gewinde 6 in das Innengewinde 7 der Überwurfmutter eingeschraubt wird, bis ihre Stirnseite 14 den Ringflansch 8 des Flüssigkeitsrohres 12 gegen den darunter befindlichen Ringflansch 9 des Flüssigkeitsrohres 13 preßt und die Ringdichtung 5 eine druckdichte Abdichtung herstellt.

## Patentansprüche

1. Sanitär- und Heizungsrohrsystem, vollständig oder überwiegend bestehend aus Kunststoff insbesondere Polypropylen, für die Wasserversorgung, mit Druckverschraubungen, insbesondere für Heißwasser und aggressive Flüssigkeiten, **gekennzeichnet** durch eine mit einem Innengewinde (7) versehene Überwurfmutter (3) mit einem bodenseitigen Ringflansch (10), der mit einer zentrischen Öffnung (11) für den Durchgang des einen von zwei Flüssigkeitsrohren (12) versehen ist und zur Aufnahme eines Endflansches (9) des einen Flüssigkeitsrohres (12) direkt durch eine mit einem Außengewinde (6) versehene und das andere Flüssigkeitsrohr (13) umgebende Mutter (4), die mit der Überwurfmutter (3) verschraubbar ist und deren unteres Ende (14) gegen einen Endflansch (8) des anderen Flüssigkeitsrohres (13) verschraubbar ist, der auf dem Endflansch (9) des ersten Flüssigkeitsrohres (12) aufliegt.

2. System nach Anspruch 1, dadurch **gekennzeichnet**, daß in wenigstens einem der beiden Endflansche (8, 9) eine Ringdichtung (5) zur Sicherstellung der dichten Verbindung der beiden Flüssigkeitsrohre (12, 13) vorgesehen ist.

3. System nach Anspruch 1 oder 2, dadurch **gekennzeichnet**, daß sowohl die Überwurfmutter (3) als auch die Mutter (4) aus Metall bestehen und daß die beiden Flüssigkeitsrohre (12, 13) aus Kunststoff bestehen.

4. System nach einem der Ansprüche 1 bis 3, dadurch **gekennzeichnet**, daß der Außenumfang (17) des Endflansches (8) des einen Flüssigkeitsrohres (12) zusammen mit dem Außenumfang (16) des Endflansches (9) des anderen Flüssigkeitsrohres (13) im verschraubten Zustand der beiden Muttern (3, 4) an der inneren Umfangsfläche (15) der Überwurfmutter (3) anliegt.

5. System nach einem der Ansprüche 1 bis 4, dadurch **gekennzeichnet**, daß der Außendurchmesser der Überwurfmutter (3) dem Außendurchmesser der Mutter (4) entspricht.
